# EUROPEAN PATENT APPLICATION

(11) **EP 4 848 563 A1**
(43) Date of publication of application: **02.12.2026**
(21) Application number: 26181375.2
(22) Date of filing: 27.05.2026
(51) Int. Cl.: H02M 7/487, H02M 1/32, H02M 1/42

(54) **FAULT TOLERANT T-TYPE 3-LEVEL AC/DC BI-DIRECTIONAL CONVERTER**

(30) Priority: 29.05.2025 IN 202511051938
(71) Applicant: Airbus SAS, 31700 Blagnac Cedex (FR)
(72) Inventor: CHAKRABORTY, Shuvam, Bristol, BS34 7PA (GB); VASHISTHA, Kartikey, Bristol, BS34 7PA (GB)
(74) Representative: Mathys & Squire

(57) **Abstract**

A T-type, 3-level AC/DC bi-directional converter comprising a plurality of converter legs, one per AC phase, of pairs of in-line switches connected between an AC source and a DC bus, connected to a respective arm of a primary bi-directional bridge for each phase comprising a pair of back-to-back switches, the arms meeting at a star node C and connected to a switching arrangement. The switches are preferably IGBTs. The switching arrangement, preferably comprising a TRIAC per arm, enables the star node (C) to be connected to any of a positive (P) terminal, negative (N) terminal or neutral point (O) terminal of the DC bus. In some embodiments a secondary bi-directional bridge is connected in parallel with the primary bi-directional bridge and with a secondary switching arrangement connected to the respective star node (C'). This allows for switches of the bi-directional bridge(s) to act in place of other switches in the event of open-circuit or short-circuit switch failures.

## Description

### FIELD OF THE INVENTION

This invention relates to a bi-directional AC/DC converter, in particular a 3-level T-type with enhanced fault-tolerance which makes it especially suited for safety-critical applications such as aerospace.

### BACKGROUND TO THE INVENTION

In aircraft applications, the conversion of AC to DC power plays a critical role in the electrical power distribution system, ensuring a stable and reliable DC power supply to onboard systems. Currently, most aircraft systems utilise unidirectional AC-to-DC power conversion, which limits the ability to convert DC back to AC when needed. Additionally, these systems typically lack power factor correction (PFC) and the capability to improve overall power quality.

T-type AC/DC converters present a promising solution, offering bi-directional power flow in aircraft electrical systems and replacing traditional diode-based rectifiers. This type of active converter not only supports bi-directional power conversion but also integrates power factor correction and reduces total harmonic distortion (THD), which enhances the overall power quality and efficiency of the system.

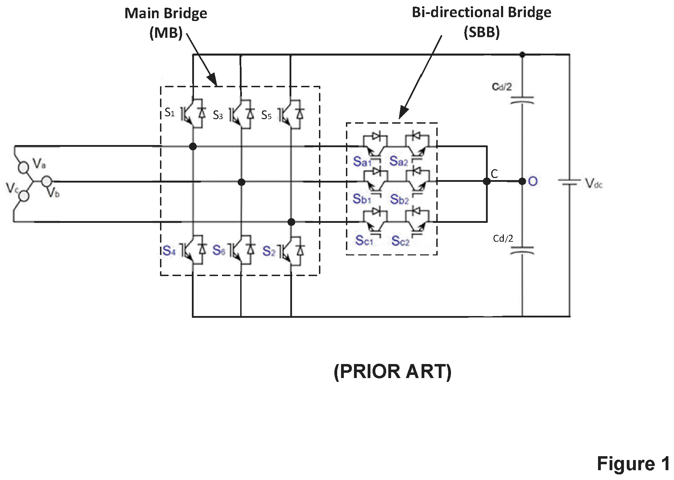

Figure 1 shows a known example of a conventional T-type, 3-level AC/DC bi-directional converter, able to deliver bi-directional power flow and power factor correction. The converter is shown connected between an AC source and a DC output (or, when operating in the reverse direction, between a DC input and an AC output). In general, such converters comprise a plurality of converter legs, one per AC phase (Va, Vb, Vc), connected to a DC bus or link, i.e. bridging across from a positive DC node to a negative DC node (indicated as Main Bridge, MB), wherein each leg comprises a pair of in-series switches (S1, S4; S3, S6; S5, S2) and is connected at a node located between the pair of switches to a respective arm of a bi-directional bridge for each phase (a, b, c), each arm comprising a pair of back-to-back switches (Sa1, Sa2; Sb1, Sb2; Sc1, Sc2), the arms meeting at a star node C (hence the bi-directional bridge may also be referred to as a star-connected bi-directional bridge, SBB) which is connected directly to a node O between capacitors Cd/2 connected or bridging across from the positive DC node to the negative DC node.

The in-series switches (S1, S4; S3, S6; S5, S2) of the main bridge MB and the back-to-back switches (Sa1, Sa2; Sb1, Sb2; Sc1, Sc2) of the bi-directional bridge SBB may comprise insulated-gate bipolar transistors (IGBTs).

IGBT switches are particularly suited for bi-directional conversion and offer advantages such as finer switching control; however, they are typically less robust than diodes and are susceptible to damage.

One significant challenge with the T-type converter is reliability, particularly in fault-tolerant operations. For example, in the converter shown in Figure 1 any fault which occurs in the any of the bridge switches may result in degradation or system failure. Given the critical nature of aircraft systems, ensuring continuous, fault-free operation is essential.

Various attempts have been made to design fault-tolerant T-type converters; however, these tend not to fully account for the full range of possible short-circuit and open-circuit faults - especially for faults in multiple components - and often result in degraded performance.

There is therefore a need for a fault-tolerant design for the T-type 3-level converter, significantly boosting its reliability and ability to withstand faults.

### SUMMARY OF THE INVENTION

Aspects and embodiments of the present invention are set out in the appended claims.

According to an aspect of the invention there is provided a T-type 3-level AC/DC bi-directional converter according to claim 1.

Specifically, there is provided a T-type, 3-level AC/DC bi-directional converter comprising: a plurality of converter legs, one per AC phase (a, b, c), connected between an AC source and a DC bus, forming a main bridge (MB) across from a positive DC node to a negative DC node, wherein each leg of the main bridge (MB) comprises a pair of in-series switches (S1, S4; S3, S6; S5, S2) and is connected at a node located between the pair of switches to a respective arm of a primary bi-directional bridge (SBB-A) for each phase (a, b, c), each arm comprising a pair of back-to-back switches (Sa1, Sa2; Sb1, Sb2; Sc1, Sc2), the arms meeting at a primary star node (C), wherein the primary star node (C) is connected to a primary switching arrangement to enable the primary bi-directional bridge (SBB-A) to be connected to any of a positive (P) terminal, negative (N) terminal or neutral point (O) terminal of the DC bus.

Preferably, the converter is adapted such that in the event of an open-circuit fault occurring in any one or all of the upper switches (S1, S3, S5) of the main bridge (MB), the primary switching arrangement connects the primary bi-directional bridge (SBB-A) to the positive terminal (P) of the DC bus, resulting in switches (Sa2, Sb2, Sc2) in the primary bi-directional bridge (SBB-A) for the corresponding phase(s) of the faulty component(s) being turned ON and corresponding switches (Sa1, Sb1, Sc1) in the primary star-connected bidirectional bridge (SBB-A) acting as a replacement for the corresponding faulty upper switches (S1, S3, S5) of the main bridge (MB).

Preferably, the converter is adapted such that in the event of an open-circuit fault occurring in any one or all of the lower switches (S4, S6, S2) of the main bridge (MB), the primary switching arrangement connects the primary bi-directional bridge (SBB-A) to the negative terminal (N) of the DC bus, resulting in switches (Sa1, Sb1, Sc1) in the primary bi-directional bridge (SBB-A) for the corresponding phase(s) of the faulty component(s) being turned ON and corresponding switches (Sa2, Sb2, Sc2) in the primary star-connected bidirectional bridge (SBB-A) acting as a replacement for the corresponding faulty lower switches (S4, S6, S2) of the main bridge (MB).

Preferably, the converter further comprises a secondary bi-directional bridge (SBB-B) connected in parallel to the primary bi-directional bridge (SBB-A), each arm of the secondary bi-directional bridge (SBB-B) comprising a pair of back-to-back switches (S'a1, S'a2; S'b1, S'b2; S'c1, S'c2), the arms meeting at a secondary star node (C'), wherein the secondary star node (C') is connected to a secondary switching arrangement to enable the secondary bi-directional bridge (SBB-B) to be connected to any of a positive (P) terminal, negative (N) terminal or neutral point (O) terminal of the DC bus.

Preferably, in a default or fault-free configuration the primary bi-directional bridge (SBB-A) is connected to the neutral point (O) terminal of the DC bus and the secondary bi-directional bridge (SBB-B) is disconnected from the DC bus.

Preferably, the converter is adapted such that in the event of an open-circuit fault occurring in any one or all of the upper switches (S1, S3, S5) of the main bridge (MB), the secondary switching arrangement connects the secondary star-connected bidirectional bridge (SBB-B) to the positive terminal (P) of the DC bus, resulting in switches (S'a2, S'b2, S'c2) in the secondary star-connected bidirectional bridge (SBB-B) for the corresponding phase(s) of the faulty component(s) being turned ON and corresponding switches (S'a1, S'b1, S'c1) in the secondary star-connected bidirectional bridge (SBB-B) acting as a replacement for the corresponding faulty upper switches (S1, S3, S5) of the main bridge (MB).

Preferably, the converter is adapted such that in the event of an open-circuit fault occurring in any one or all of the lower switches (S4, S6, S2) of the main bridge (MB), the secondary switching arrangement connects the secondary star-connected bidirectional bridge (SBB-B) to the negative terminal (N) of the DC bus, resulting in switches (S'a1, S'b1, S'c1) of the secondary star-connected bidirectional bridge (SBB-B) for the corresponding phase(s) of the faulty component(s) being turned ON and corresponding switches (S'a2, S'b2, S'c2) of the secondary star-connected bidirectional bridge (SBB-B) acting as a replacement for the corresponding faulty lower switches (S4, S6, S2) of the main bridge (MB).

Preferably, the converter is adapted such that in the event of an open-circuit fault occurring in both the upper switches (S1, S3, S5) and the lower switches (S4, S6, S2) of the main bridge (MB): i) the primary switching arrangement connects the primary bidirectional bridge (SBB-A) to the positive terminal (P) of the DC bus, resulting in switches (Sa2, Sb2, Sc2) in the primary star-connected bidirectional bridge (SBB-A) for the corresponding phase(s) of the faulty component(s) being turned ON and the switches (Sa1, Sb1, Sc1) of the primary bidirectional bridge (SBB-A) for the corresponding phases acting as replacements for the faulty upper switches of the main bridge (MB); and ii) the secondary switching arrangement connects the secondary bidirectional bridge (SBB-B) to the negative terminal (N) of the DC bus, resulting in switches (S'a1, S'b1, S'c1) in the secondary star-connected bidirectional bridge (SBB-B) for the corresponding phase(s) of the faulty component(s) being turned ON and the switches (S'a2, S'b2, S'c2) of the secondary bidirectional bridge (SBB-B) for the corresponding phases acting as replacements for the faulty lower switches of the main bridge (MB).

Preferably, the converter is adapted such that in the event of an open-circuit fault occurring in any one or more switches (Sa1-Sc1, Sa2-Sc2) of the primary bidirectional bridge (SBB-A), the primary switching arrangement disconnects the primary bidirectional bridge (SBB-A) from the DC bus, and the secondary switching arrangement connects the secondary bidirectional bridge (SBB-B) to the neutral point (O) terminal of the DC bus, resulting in the switches (S'a1-S'c1, S'a2-S'c2) of the secondary bidirectional bridge (SBB-B) for the corresponding phases acting as replacements for the faulty switches of the primary bidirectional bridge (SBB-A).

Preferably, the converter is adapted such that in the event of a short-circuit fault occurring in one or more of the pair of switches (Sa1, Sa2; Sb1, Sb2; Sc1, Sc2) per phase (a, b, c) of the primary bidirectional bridge (SBB-A), i) the primary switching arrangement disconnects the primary bidirectional bridge (SBB-A) from the DC bus; and ii) the secondary switching arrangement connects the secondary bidirectional bridge (SBB-B) to the neutral point (O), resulting in the secondary bidirectional bridge (SBB-B) acting as replacement for the functionality of primary bidirectional bridge (SBB-A).

Preferably, each leg of the main bridge (MB) further comprises at least one further switch (S'n) in-series with the pair of in-series switches (S1, S4; S3, S6; S5, S2).

The switches may comprise insulated-gate bipolar transistors, IGBTs.

At least one switching arrangement may be a three-way toggle switch, and/or, for each arm, a respective bidirectional triode thyristor or TRIAC.

Preferably, at least one of the arms of the primary bi-directional bridge (SBB-A) or the secondary bi-directional bridge (SBB-B) is connected to the mid-point node of the main bridge (MB) via a switch, preferably a TRIAC (Tas, Tbs, Tcs).

The number of DC levels and/or the number of AC phases may be at least three.

Also provided are power conversion system and a vehicle, preferably an aircraft, comprising a converter as set out herein.

This may improve the fault tolerance and reliability of the AC/DC bi-directional T-type converter by enhancing its redundancy. This enhancement is designed to guarantee continuous and stable operation of the converter under diverse fault conditions. By improving the converter's resilience, this approach makes it better suited for the demanding environments of aircraft, offering a more reliable solution for modern, high-performance electrical systems in aerospace applications.

One potential application of these converters is to serve as a power conversion unit between the Auxiliary Power Unit (APU) and the DC bus, enabling efficient power flow in both directions. While the power requirements for the DC bus are obvious, the APU's power needs arise primarily during the startup of its generator.

Another possible application for such a converter is to facilitate power flow between an e-motor/e-generator and the distribution system. In this case, the same motor would need to function both as a motor and a generator, requiring bi-directional functionality.

### BRIEF DESCRIPTION OF THE DRAWINGS

In order that the invention may be more readily understood, reference will now be made by way of example to the accompanying drawings in which:
Figure 1 shows a known example of a conventional T-type, 3-level AC/DC bi-directional converter;
Figure 2 shows a fault-tolerant T-type, 3-level AC/DC bi-directional converter;
Figure 3 shows operation of the fault-tolerant bi-directional converter in the event of various open-circuit faults;
Figure 4 shows a first variant of the fault-tolerant bi-directional converter;
Figure 5 shows a second variant of the fault-tolerant bi-directional converter;
Figures 6-9 show operation of the first and second variants in the event of various open-circuit faults;
Figures 10 and 11 show operation of the second variant in the event of various short-circuit faults;
Figure 12 shows a third variant of the fault-tolerant bi-directional converter; and
Figures 13(a)-(c) show operation of the third variant in the event of various open-circuit faults;
Figures 14(a)-(c) show operation of the third variant in the event of various short-circuit faults;
Figure 15 shows a fourth variant of the fault-tolerant bi-directional converter; and
Figure 16 shows an example of an aircraft comprising a converter as herein described.

### DETAILED DESCRIPTION OF PREFERRED EMBODIMENTS

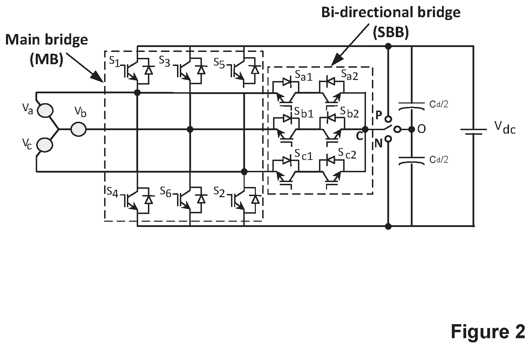

Figure 2 shows a fault-tolerant T-type, 3-level AC/DC bi-directional converter. The arrangement of switches is essentially the same as in the conventional IGBT-based T-type, 3-level AC/DC converter of Figure 1, except star node C is connected to a three-way toggle switch to enable connection to any of the positive (P) terminal, negative (N) terminal or neutral point (O) terminal (between the capacitors Cd/2) of the DC bus.

This is in contrast to the conventional design, where the SBB star node C is directly connected only to the neutral point (O), as shown in Figure 1. The toggle switch is operated via control circuitry (comprising e.g. in-circuit voltage / current sensors), not shown.

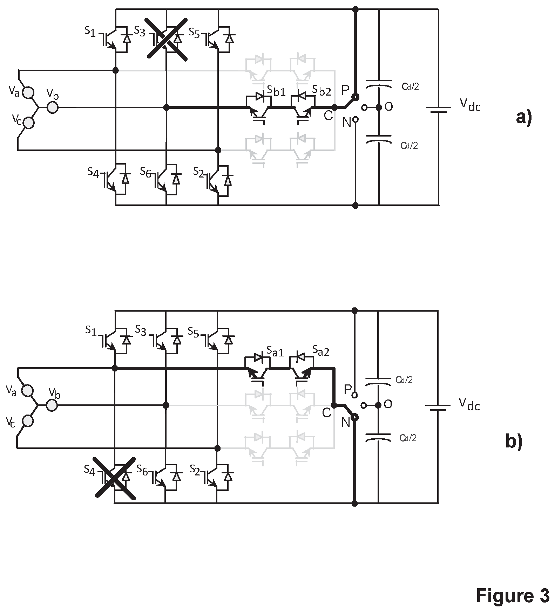

Figure 3 shows operation of the fault-tolerant bi-directional converter in the event of various open-circuit faults. Generally, current paths are indicated in bold.

Since the star-connected bi-directional bridge SBB comprises two IGBT switches connected in opposite directions, it enables control of both current and voltage in either direction. This allows the SBB to operate as either the upper or lower switches of the main bridge, or as neutral clamp switches, at any given instant.

Figure 3(a) shows the response in the event of a switch open-circuit fault of the upper switch (S3) of the main bridge for phase b. The three-way switch is activated to connect star node C to the positive terminal (P) of the DC bus, resulting in switch Sb2 being turned ON and switch Sb1 acting as a replacement for the failed switch S3.

Figure 3(b) shows the response in the event of a switch open-circuit fault of the lower switch (S4) of the main bridge for phase a. The three-way switch is activated to connect star node C to the negative terminal (N) of the DC bus, resulting in switch Sa1 being turned ON and switch Sa2 acting as a replacement for the failed switch S4.

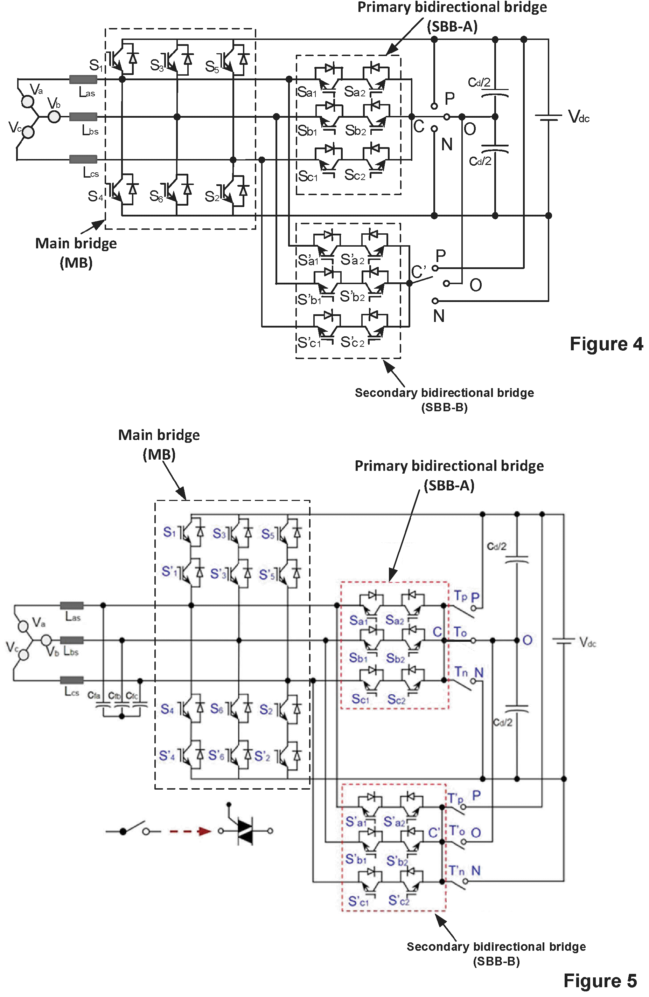

Figure 4 shows a first variant of the fault-tolerant bi-directional converter.

In this first variant, a primary star-connected bi-directional bridge SBB-A, comprising a respective arm for each phase (a, b, c), each arm comprising a pair of back-to-back switches (Sa1, Sa2; Sb1, Sb2; Sc1, Sc2) has connected in parallel a secondary star-connected bi-directional bridge SBB-B, comprising a respective arm for each phase (a, b, c), each arm comprising a pair of back-to-back switches (S'a1, S'a2; S'b1, S'b2; S'c1, S'c2).

The arms of each bi-directional bridge SBB-A, SBB-B meet at a respective star nodes C, C' which are connected via respective three-way toggle switches to enable connection of each of bi-directional bridge SBB-A and SBB-B to any of the positive (P) terminal, negative (N) terminal or neutral point (O) terminal.

Figure 5 shows a second variant of the fault-tolerant bi-directional converter.

In this second variant, main bridge MB now comprises two IGBT switches connected in series in each arm per phase (such that each switch Sn of S1-S6 has in series a corresponding second switch S'n, i.e. S'1-S'6), offering protection against faults due to short-circuiting of any individual switch.

In this second variant, the primary star-connected bi-directional bridge SBB-A, comprising a respective arm for each phase (a, b, c), each arm comprising a pair of back-to-back switches (Sa1, Sa2; Sb1, Sb2; Sc1, Sc2) has connected in parallel a secondary star-connected bi-directional bridge SBB-B, comprising a respective arm for each phase (a, b, c), each arm comprising a pair of back-to-back switches (S'a1, S'a2; S'b1, S'b2; S'c1, S'c2).

The arms of each bi-directional bridge SBB-A, SBB-B meet at a respective star nodes C, C' which are connected via respective groups of three TRIAC switches (Tp, Tn, To; T'p, T'n, T'o) to enable connection of each of bi-directional bridge SBB-A and SBB-B to any of the positive (P) terminal, negative (N) terminal or neutral point (O) terminal.

TRIACs are selected for their low cost, high reliability, and bi-directional switching capabilities, typically having failure rates of 1-2 orders of magnitude lower than comparable IGBTs. The TRIACs are operated via control circuitry (comprising e.g. in-circuit voltage / current sensors), not shown.

The following descriptions refer predominantly to operation of the second variant, wherein connections of the bi-directional bridges are governed by TRIAC switches; corresponding operational states of the first variant are shown alongside for comparison.

### Normal Operation

Under normal operation (as shown in Figure 5), the TRIAC To is turned ON to connect SBB-A to the neutral point (O) between the capacitors Cd/2, while TRIACs Tp and Tn are turned OFF. Meanwhile, all the TRIACs (T'p, T'o, and T'n) associated with second bidirectional bridge (SBB-B) are turned OFF to disconnect SBB-B from any point of the DC bus.

### Fault Condition(s)

In the event of a fault condition, both primary bidirectional bridge SBB-A and secondary bidirectional bridge SBB-B can connect to the positive terminal (P), the negative terminal (N), or the neutral point (O), depending on the type of fault.

The following sections describe the circuit configuration and operation for different fault scenarios.

### Switch Open-Circuit Faults

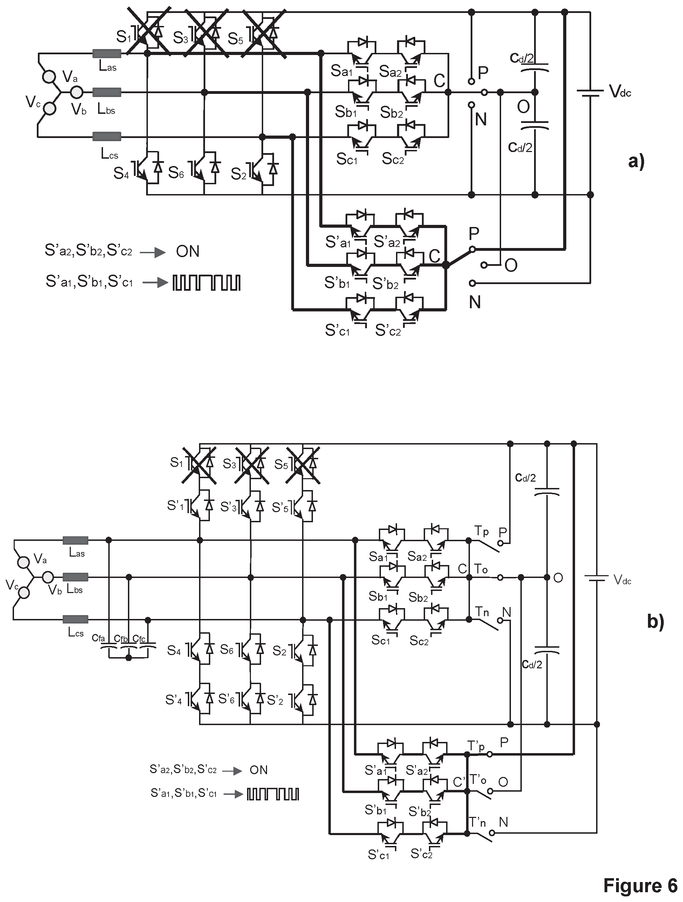

Figures 6-9 show operation of the first and second variants in the event of various open-circuit faults.

### Case: 1 - Switch Open-Circuit (SOC) fault of upper switches of the main bridge

Figure 6 shows circuit operation during a switch open circuit (SOC) fault in the upper switches of the main bridge MB.

If an SOC fault occurs in any one or all of the upper switches (S1, S3, S5) of the main bridge, TRIAC T'p of the secondary star-connected bidirectional bridge (SBB-B) is turned ON immediately, causing SBB-B to connect to the positive terminal (P) of the DC bus. As a result, switches S'a2, S'b2, S'c2 for the corresponding phase(s) of the faulty component(s) are turned ON and corresponding switches S'a1, S'b1, S'c1 in the secondary star-connected bidirectional bridge SBB-B will function as replacements for the corresponding faulty upper switches S1, S3, S5 of the main bridge.

For example, if an SOC fault occurs in the upper switches of the main bridge of phases a and c (S1 and S5), TRIAC T'p is turned ON immediately, and consequently the switches S'a2 and S'c2 are also turned ON, so that S'a1 and S'c1 will function as replacements for S1 and S5, respectively. S3 for phase b is unaffected.

With this operation, there is no impact on system performance, and the 3-level voltage output will remain unchanged, as it was before the fault condition.

### Case: 2 - Switch Open-Circuit (SOC) fault of lower switches of the main bridge

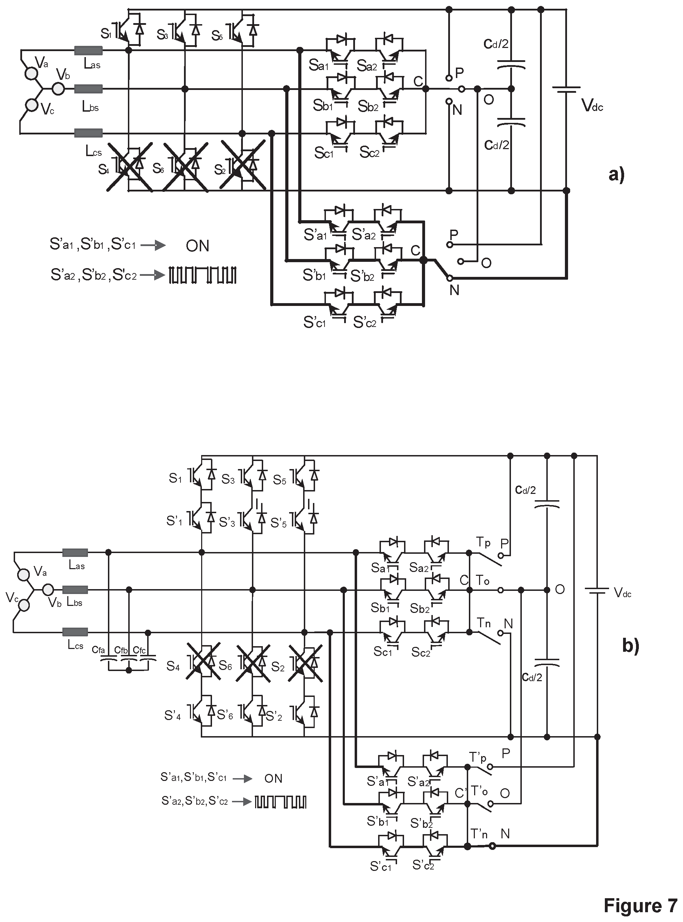

Figure 7 shows circuit operation during a switch open-circuit (SOC) fault in lower switches of the main bridge MB.

If an SOC fault occurs in any one or all of the lower switches (S4, S6, S2) of the main bridge, T'n of the secondary star-connected bidirectional bridge (SBB-B) is turned ON immediately, causing SBB-B to connect to the negative terminal (N) of the DC bus. As a result, switches S'a1, S'b1, S'c1 for the corresponding phase(s) of the faulty component(s) are also turned ON and corresponding switches S'a2, S'b2, S'c2 in SBB-B will function as replacements for the corresponding faulty lower switches S4, S6, S2of the main bridge.

For example, if an SOC fault occurs in the lower switches of the main bridge of phases a and c (S4 and S2), TRIAC T'n is turned ON immediately, and consequently the switches S'a1 and S'c1 are also turned ON, so that S'a2 and S'c2 will function as replacements for S4 and S2, respectively. S6 for phase b remains unaffected.

With this operation, there is no impact on system performance, and the 3-level voltage output will remain unchanged, as it was before the fault condition.

### Case: 3 - Switch Open Circuit (SOC) fault of upper and lower switches of the main bridge

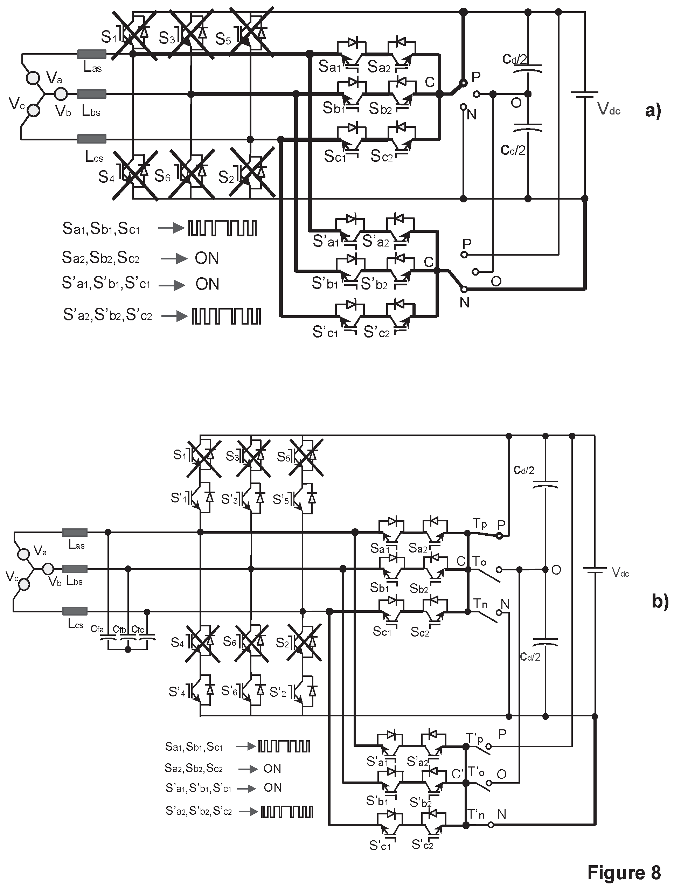

Figure 8 shows circuit operation during a SOC fault in both the upper and lower switches of the main bridge MB.

If an SOC fault occurs in both the upper and lower switches of the main bridge in one phase or across all phases:

For the primary bidirectional bridge SBB-A, TRIAC To is turned OFF and TRIAC Tp is turned ON, thereby switching the connection of the neutral point of SBB-A (C) from the neutral point of the DC bus or link (O) to the positive terminal (P) of the DC bus. As a result, the switches in SBB-A for the corresponding phases will act as replacements for the faulty upper switches of the main bridge.

For the secondary bidirectional bridge SBB-B, the TRIAC T'n is turned ON so that the neutral point of SBB-B (C') is connected to the negative terminal (N) of the DC bus. As a result, the switches in SBB-B for the corresponding phases will act as replacements for the faulty lower switches of the main bridge.

For example, if an SOC fault occurs in all the switches of the main bridge:
For SBB-A, TRIAC To is turned OFF and TRIAC Tp is turned ON, so that the switches Sa2-Sc2 are turned ON, as a result switches Sa1, Sa3, and Sc1 will operate as replacements for the faulty S1, S3, and S5, respectively.

For SBB-B, TRIAC T'n is turned ON, so that the switches S'a1-S'c1 are turned ON, as a result S'a2, S'b2, and S'c1 will function as replacements for faulty S4, S6, and S2, respectively.

The resulting circuit will not output the zero-level since no SBB is connected to the neutral point (O) of the DC bus or link. Therefore, post-fault, the system will operate as a 2-level converter.

### Case: 4 - Switch Open Circuit (SOC) fault of switches of the primary bidirectional bridge

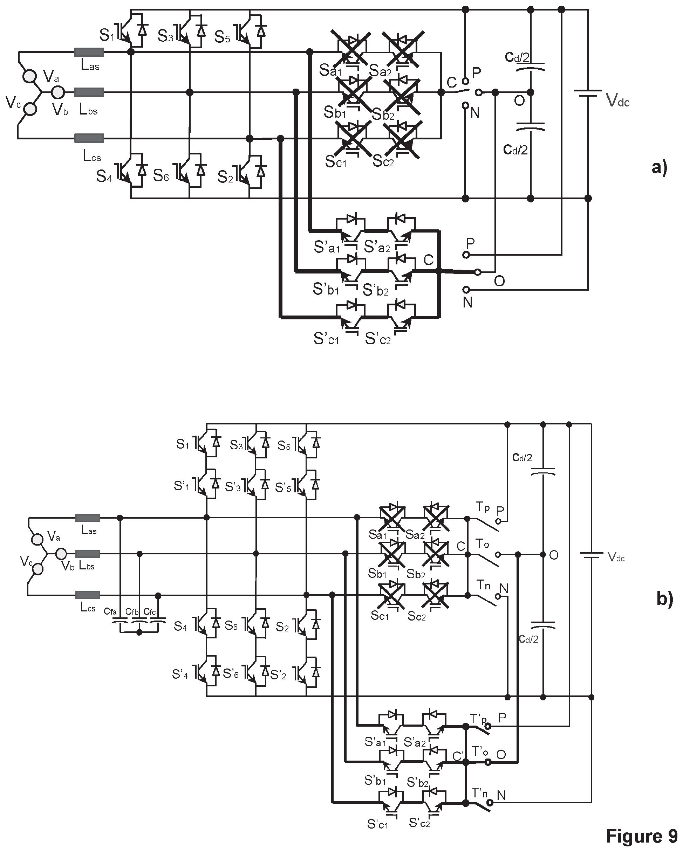

Figure 9 shows circuit operation during a SOC fault in the switches of the primary star-connected bidirectional bridge SBB-A.

If an SOC fault occurs in any one or all of the switches (Sa1-Sc1, Sa2-Sc2) of the SBB-A, Tp, To and Tn are turned OFF immediately. Simultaneously, T'o is turned ON, causing SBB-B to connect to the neutral point (0) of the DC bus.

As a result, the switches in SBB-B for the corresponding phases will function as replacements for the switches of SBB-A as they are connected in parallel.

With this operation, there is no impact on system performance, and the 3-level voltage output will remain unchanged, as it was before the fault condition.

### Switch Short-Circuit Faults

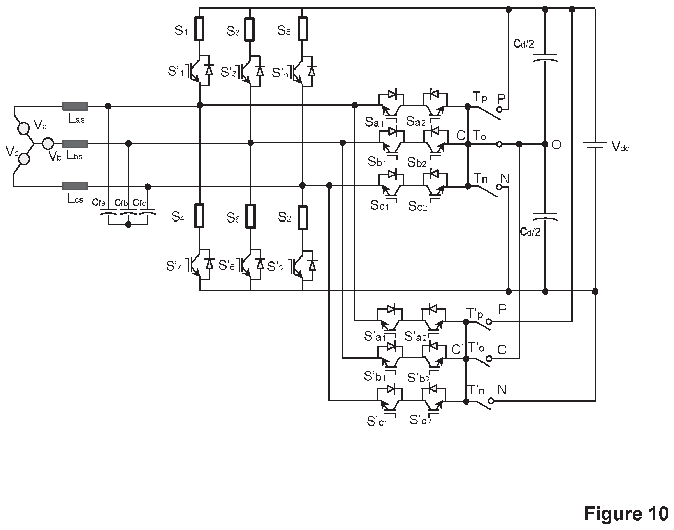

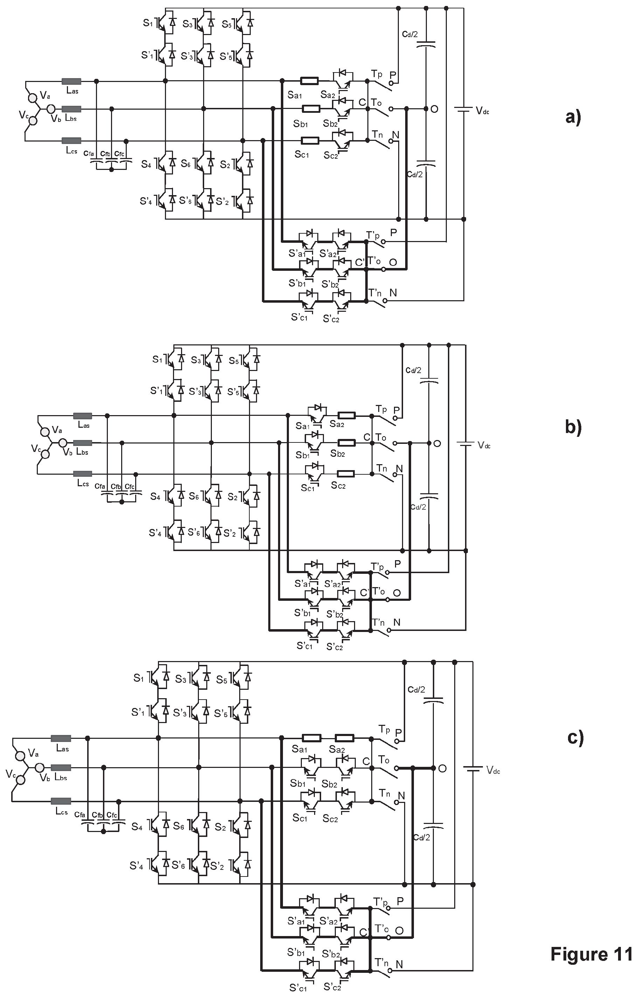

Figures 10 and 11 show operation of the second variant in the event of various short-circuit faults.

### Case: 5 - Switch short-circuit (SSC) fault of upper and lower switches of the main bridge

Figure 10 shows operation of the second variant in the event of short-circuit faults.

In the case of an SSC fault where one or more switches in the main bridge MB are short-circuited, the corresponding series switch act as replacements for the faulty switch(es).

For example, if S2 and S3 are affected by an SSC fault, S'2 and S'3 will take over the operation of the corresponding faulty switches.

The SSC fault will not affect the performance of the converter. The 3-level voltage output will remain unchanged, as it was before the fault condition.

### Case: 6 - Switch Short Circuit (SSC) fault of switches of the primary bidirectional bridge

Figure 11 shows circuit operation during SSC fault in switches of SBB-A in three different fault scenarios.

Referring to Figures 11(a) and (b), if an SSC fault occurs in only one switch per phase of the primary bidirectional bridge SBB-A (e.g. Sa1, Sb1 or Sc1), the other switch of the same phase (i.e. Sa2, Sb2 or Sc2), along with the TRIAC, To, are turned OFF immediately, resulting in the disconnection of SBB-A from the DC bus, and TRIAC T'o is turned ON so that the functionality of primary bidirectional bridge SBB-A is replaced by secondary bidirectional bridge SBB-B.

Referring to Figure 11(c), the same will be applicable if SSC faults occur in both the switches of the primary bidirectional bridge SBB-A (i.e. Sa1 and Sa2; Sb1 and Sb2; Sc1 and Sc2) of any single phase.

The main bridge will function as it did prior to the fault. In this case, the SSC fault will not affect the performance of the converter, and the 3-level voltage output will remain unchanged, as it was before the fault condition.

### FURTHER ALTERNATIVE EMBODIMENTS

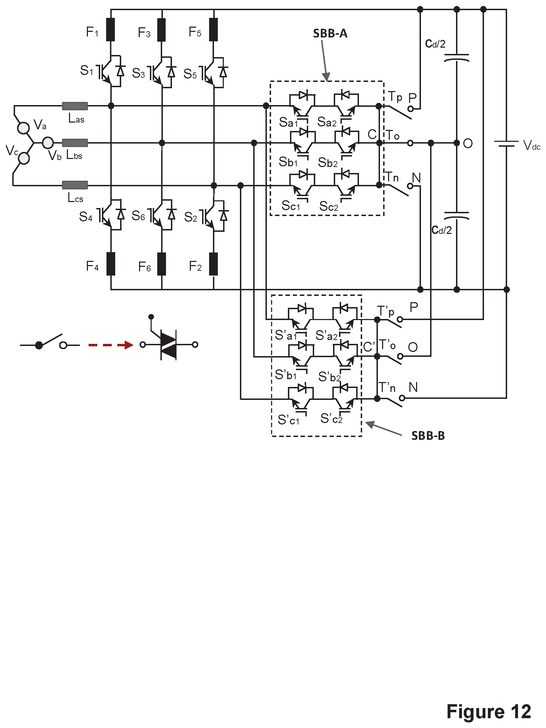

Figure 12 shows a third variant of the fault-tolerant bi-directional converter. This is essentially a modified version of the second variant, wherein connections of the bi-directional bridges are governed by TRIAC switches, except in this third variant each switch (S1-S6) is paired not with a corresponding in-series switch but instead with a corresponding in-series fuse (F1-F6).

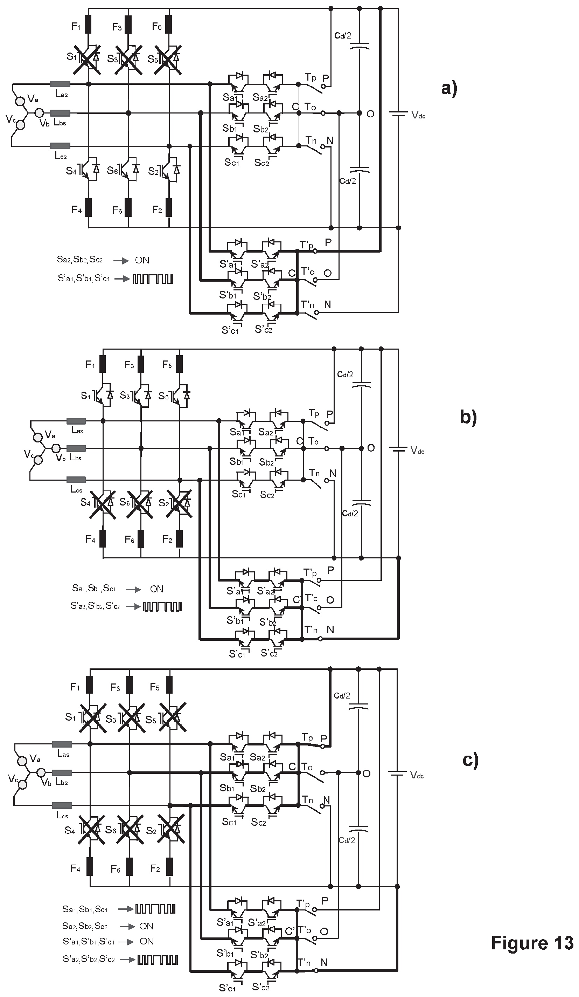

Figures 13(a)-(c) show operation of the third variant in the event of various open-circuit faults (the fuse protects the converter from short-circuit faults in the switches of the main bridge; however, due to the fuse limitations, such as its slow response time, an IGBT switch is generally preferred):

| **Fault** | **Figure** | **SBB-A connection** | **SBB-B connection** | **Comment** |
|---|---|---|---|---|
| Main bridge, upper switch | 13(a) | O | P | Operation similar to that shown in Fig. 6 |
| Main bridge, lower switch | 13(b) | O | N | Operation similar to that shown in Fig. 7 |
| Main bridge, upper and lower switch | 13(c) | P | N | Operation similar to that shown in Fig. 8 |

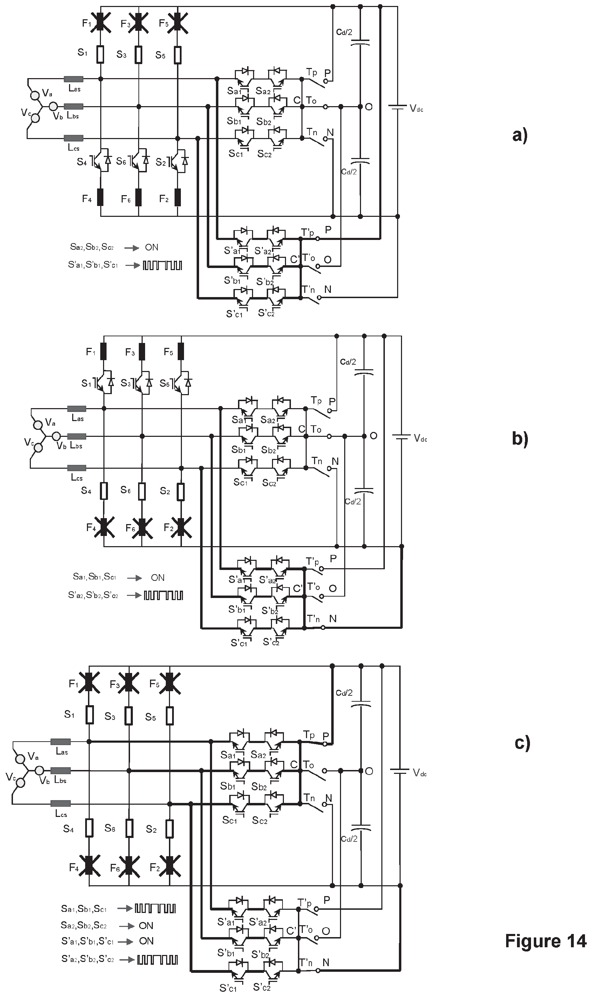

Figures 14(a)-(c) show operation of the third variant in the event of various short-circuit faults:

| **Fault** | **Figure** | **SBB-A connection** | **SBB-B connection** | **Comment** |
|---|---|---|---|---|
| Main bridge, upper switch and upper fuse | 14(a) | O | P | If over/high current flows through upper switches of main bridge, fuse, F1/F3/F5 will disconnect the corresponding upper leg from the system. That corresponding leg will be operated as SOC. Then the circuit will be operated same as Fig 13 (a). |
| Main bridge, lower switch and lower fuse | 14(b) | O | N | Similar scenario for over current fault in lower switches. |
| Main bridge, upper and lower, both switches and fuses | 14(c) | P | N | Similar scenario for over current fault in upper and lower switches. |

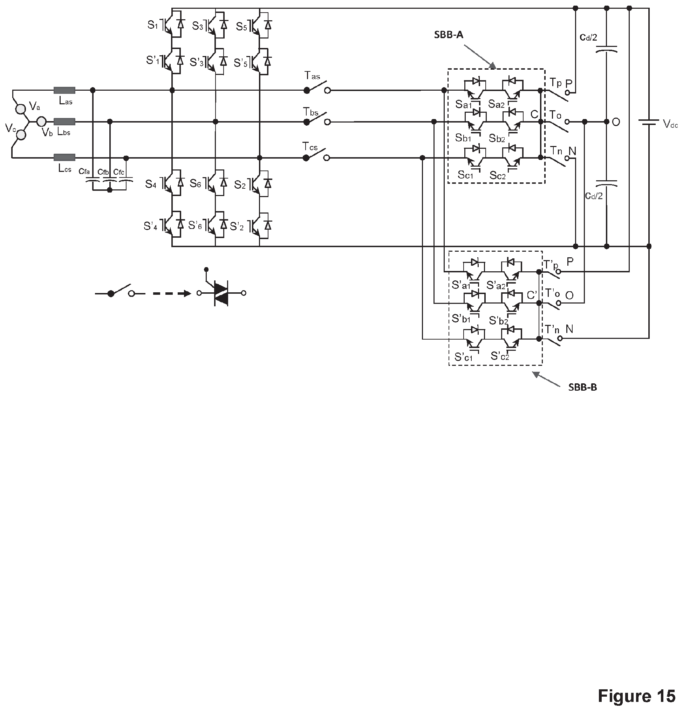

Figure 15 shows a fourth variant of the fault-tolerant bi-directional converter, in which, to avoid the fault due to a short circuit in both the midpoint switches in any two phases or three phases, three additional TRIACs (Tas, Tbs, Tcs) have been added in series with midpoint switches in each phase, to further improve availability.

In summary, there are provided enhanced versions of the T-type 3-level AC/DC bidirectional converter, designed to improve reliability through the addition of redundant switches.

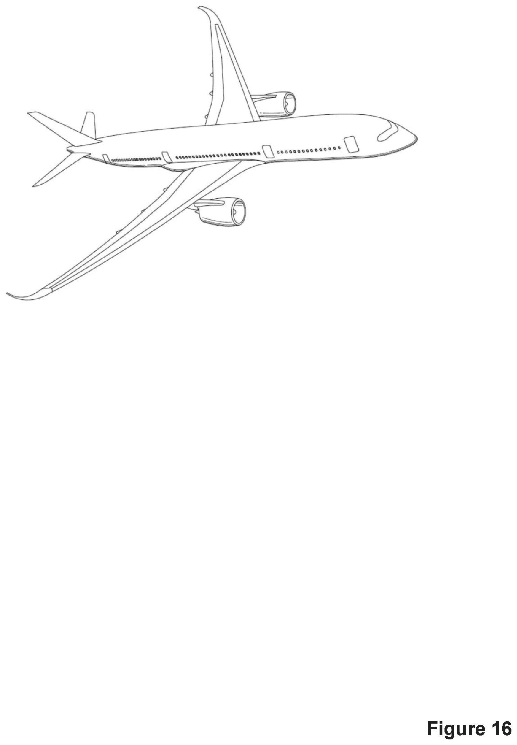

Figure 16 shows an example of an aircraft comprising a converter as herein described. The aircraft for which the invention is employed may be a commercial passenger aircraft, for example an aircraft capable of transporting more than 50 passengers, for example more than 100 passengers. For the purposes of this application the term "commercial passenger aircraft" is also taken to include aircraft of the same type configured for cargo transport.

The skilled person will appreciate the converter as herein described may be employed in other forms of vehicles, including automobiles, as well as more generally in many environments, both commercial and domestic.

In summary, the present disclosure provides a T-type, 3-level AC/DC bi-directional converter comprising a plurality of converter legs, one per AC phase, of pairs of in-line switches connected between an AC source and a DC bus, connected to a respective arm of a primary bi-directional bridge for each phase comprising a pair of back-to-back switches, the arms meeting at a star node C and connected to a switching arrangement. The switches are preferably IGBTs. The switching arrangement, preferably comprising a TRIAC per arm, enables the star node (C) to be connected to any of a positive (P) terminal, negative (N) terminal or neutral point (O) terminal of the DC bus. In some embodiments a secondary bi-directional bridge is connected in parallel with the primary bi-directional bridge and with a secondary switching arrangement connected to the respective star node (C'). This allows for switches of the bi-directional bridge(s) to act in place of other switches in the event of open-circuit or short-circuit switch failures.

## Claims

1. A T-type, 3-level AC/DC bi-directional converter comprising:
a plurality of converter legs, one per AC phase (a, b, c), connected between an AC source and a DC bus, forming a main bridge (MB) across from a positive DC node to a negative DC node,
wherein each leg of the main bridge (MB) comprises a pair of in-series switches (S1, S4; S3, S6; S5, S2) and is connected at a node located between the pair of switches to a respective arm of a primary bi-directional bridge (SBB-A) for each phase (a, b, c), each arm comprising a pair of back-to-back switches (Sa1, Sa2; Sb1, Sb2; Sc1, Sc2), the arms meeting at a primary star node (C),
wherein the primary star node (C) is connected to a primary switching arrangement to enable the primary bi-directional bridge (SBB-A) to be connected to any of a positive (P) terminal, negative (N) terminal or neutral point (O) terminal of the DC bus.

2. The converter of claim 1, adapted such that in the event of an open-circuit fault occurring in any one or all of the upper switches (S1, S3, S5) of the main bridge (MB), the primary switching arrangement connects the primary bi-directional bridge (SBB-A) to the positive terminal (P) of the DC bus, resulting in switches (Sa2, Sb2, Sc2) in the primary bidirectional bridge (SBB-A) for the corresponding phase(s) of the faulty component(s) being turned ON and corresponding switches (Sa1, Sb1, Sc1) in the primary star-connected bidirectional bridge (SBB-A) acting as a replacement for the corresponding faulty upper switches (S1, S3, S5) of the main bridge (MB).

3. The converter of claim 1 or claim 2, adapted such that in the event of an open-circuit fault occurring in any one or all of the lower switches (S4, S6, S2) of the main bridge (MB), the primary switching arrangement connects the primary bi-directional bridge (SBB-A) to the negative terminal (N) of the DC bus, resulting in switches (Sa1, Sb1, Sc1) in the primary bidirectional bridge (SBB-A) for the corresponding phase(s) of the faulty component(s) being turned ON and corresponding switches (Sa2, Sb2, Sc2) in the primary star-connected bidirectional bridge (SBB-A) acting as a replacement for the corresponding faulty lower switches (S4, S6, S2) of the main bridge (MB).

4. The converter of claim 1, further comprising a secondary bi-directional bridge (SBB-B) connected in parallel to the primary bi-directional bridge (SBB-A), each arm of the secondary bi-directional bridge (SBB-B) comprising a pair of back-to-back switches (S'a1, S'a2; S'b1, S'b2; S'c1, S'c2), the arms meeting at a secondary star node (C'),
wherein the secondary star node (C') is connected to a secondary switching arrangement to enable the secondary bi-directional bridge (SBB-B) to be connected to any of a positive (P) terminal, negative (N) terminal or neutral point (O) terminal of the DC bus;
optionally wherein in a default or fault-free configuration the primary bi-directional bridge (SBB-A) is connected to the neutral point (O) terminal of the DC bus and the secondary bi-directional bridge (SBB-B) is disconnected from the DC bus.

5. The converter of claim 4, adapted such that in the event of an open-circuit fault occurring in any one or all of the upper switches (S1, S3, S5) of the main bridge (MB), the secondary switching arrangement connects the secondary star-connected bidirectional bridge (SBB-B) to the positive terminal (P) of the DC bus, resulting in switches (S'a2, S'b2, S'c2) in the secondary star-connected bidirectional bridge (SBB-B) for the corresponding phase(s) of the faulty component(s) being turned ON and corresponding switches (S'a1, S'b1, S'c1) in the secondary star-connected bidirectional bridge (SBB-B) acting as a replacement for the corresponding faulty upper switches (S1, S3, S5) of the main bridge (MB).

6. The converter of claim 4 or claim 5, adapted such that in the event of an open-circuit fault occurring in any one or all of the lower switches (S4, S6, S2) of the main bridge (MB), the secondary switching arrangement connects the secondary star-connected bidirectional bridge (SBB-B) to the negative terminal (N) of the DC bus, resulting in switches (S'a1, S'b1, S'c1) of the secondary star-connected bidirectional bridge (SBB-B) for the corresponding phase(s) of the faulty component(s) being turned ON and corresponding switches (S'a2, S'b2, S'c2) of the secondary star-connected bidirectional bridge (SBB-B) acting as a replacement for the corresponding faulty lower switches (S4, S6, S2) of the main bridge (MB).

7. The converter of any of claims 4 to 6, adapted such that in the event of an open-circuit fault occurring in both the upper switches (S1, S3, S5) and the lower switches (S4, S6, S2) of the main bridge (MB):
i) the primary switching arrangement connects the primary bidirectional bridge (SBB-A) to the positive terminal (P) of the DC bus, resulting in switches (Sa2, Sb2, Sc2) in the primary star-connected bidirectional bridge (SBB-A) for the corresponding phase(s) of the faulty component(s) being turned ON and the switches (Sa1, Sb1, Sc1) of the primary bidirectional bridge (SBB-A) for the corresponding phases acting as replacements for the faulty upper switches (S1, S3, S5) of the main bridge (MB); and
ii) the secondary switching arrangement connects the secondary bidirectional bridge (SBB-B) to the negative terminal (N) of the DC bus, resulting in switches (S'a1, S'b1, S'c1) in the secondary star-connected bidirectional bridge (SBB-B) for the corresponding phase(s) of the faulty component(s) being turned ON and the switches (S'a2, S'b2, S'c2) of the secondary bidirectional bridge (SBB-B) for the corresponding phases acting as replacements for the faulty lower switches (S4, S6, S2) of the main bridge (MB).

8. The converter of any of claims 4 to 7, adapted such that in the event of an open-circuit fault occurring in any one or more switches (Sa1-Sc1, Sa2-Sc2) of the primary bidirectional bridge (SBB-A), the primary switching arrangement disconnects the primary bidirectional bridge (SBB-A) from the DC bus, and the secondary switching arrangement connects the secondary bidirectional bridge (SBB-B) to the neutral point (O) terminal of the DC bus, resulting in the switches (S'a1-S'c1, S'a2-S'c2) of the secondary bidirectional bridge (SBB-B) for the corresponding phases acting as replacements for the faulty switches of the primary bidirectional bridge (SBB-A).

9. The converter of any of claims 4 to 8, adapted such that in the event of a short-circuit fault occurring in one or more of the pair of switches (Sa1, Sa2; Sb1, Sb2; Sc1, Sc2) per phase (a, b, c) of the primary bidirectional bridge (SBB-A):
i) the primary switching arrangement disconnects the primary bidirectional bridge (SBB-A) from the DC bus; and
(ii) the secondary switching arrangement connects the secondary bidirectional bridge (SBB-B) to the neutral point (O) terminal, resulting in the secondary bidirectional bridge (SBB-B) acting as replacement for the functionality of the primary bidirectional bridge (SBB-A).

10. The converter of any preceding claim, wherein each leg of the main bridge (MB) further comprises at least one further switch (S'n) in-series with the pair of in-series switches (S1, S4; S3, S6; S5, S2).

11. The converter of any preceding claim, wherein the switches comprise insulated-gate bipolar transistors, IGBTs;
and/or wherein at least one switching arrangement comprises a three-way toggle switch;
and/or wherein at least one switching arrangement comprises, for each arm, a respective bidirectional triode thyristor or TRIAC.

12. The converter of any preceding claim, wherein at least one of the arms of the primary bi-directional bridge (SBB-A) or the secondary bi-directional bridge (SBB-B) is connected to the mid-point node of the main bridge (MB) via a switch, preferably a TRIAC (Tas, Tbs, Tcs).

13. A converter according to any preceding claim, wherein the number of levels is at least three;
and/or wherein the number of AC phases is at least three.

14. A power conversion system comprising a converter according to any preceding claim.

15. A vehicle, preferably an aircraft, comprising a converter according to any of claims 1 to 13.
